Europäisches Patentamt

(19) European Patent Office　　　　　　(11) Numéro de publication: **0 246 972**

Office européen des brevets　　　　　　　　　　　　　　　　　　　**B1**

⑫　　　　　　　**FASCICULE DE BREVET EUROPÉEN**

(45) Date de publication du fascicule du brevet:　　(51) Int. Cl. ⁴: **F 16 F　9/36, F 16 J　15/56**
　　**17.01.90**

(21) Numéro de dépôt: **87401132.3**

(22) Date de dépôt: **20.05.87**

(54) **Palier à compensation d'effort radial.**

(30) Priorité: **22.05.86 FR 8607332**

(43) Date de publication de la demande:
　　**25.11.87 Bulletin 87/48**

(45) Mention de la délivrance du brevet:
　　**17.01.90 Bulletin 90/03**

(84) Etats contractants désignés:
　　**DE GB IT**

(56) Documents cité:
　　**DE-A-2 206 771
　　DE-A-3 414 821
　　DE-B-2 915 728
　　FR-A-2 530 549
　　GB-A-2 139 299**

(73) Titulaire: **AUTOMOBILES PEUGEOT
　　75, avenue de la Grande Armée
　　F-75116 Paris (FR)**
　　Titulaire: **AUTOMOBILES CITROEN
　　62 Boulevard Victor-Hugo
　　F-92200 Neuilly-sur-Seine (FR)**

(72) Inventeur: **Hoekman, Didier
　　64 Square Ronsard
　　F-77350 Le Mee Sur Seine (FR)**

(74) Mandataire: **Durand, Yves Armand Louis
　　Cabinet Z. Weinstein 20, Avenue de Friedland
　　F-75008 Paris (FR)**

LIBERGRAF, STOCKHOLM 1990

EP 0 246 972 B1

## Description

La présente invention a essentiellement pour objet une réalisation particulière de palier à compensation d'effort radial.

On sait que dans les suspensions hydropneumatiques connues sous le nom "Mac Pherson", il se produit un effort radial sur le palier monté à l'extrémité du corps alimenté en fluide sous pression et dans lequel coulisse un piston. Cet effort vient contrarier la recherche d'un coulissement correct au niveau de ce palier, lors des débattements de la suspension.

On a déjà proposé, comme décrit dans le document DE-B-2 915 728, de compenser cet effort par l'utilisation d'un joint d'étanchéité incliné.

Cependant, une telle realisation d'étanchéité présente un certain nombre d'inconvénients parmi lesquels on peut citer la difficulté de montage du joint dans la rainure inclinée ménagée dans le palier.

On a également proposé dans le document GB-A-2 139 299 de réaliser dans un palier pour arbre rotatif un chambrage avec épaulement incliné de butée pour un joint interposé dans le chambrage entre arbre et palier. Mais un tel chambrage demeure ouvert vers l'extérieur, de sorte que le joint peut s'échapper du chambrage sous l'effet de la pression d'une translation axiale de l'arbre dans le palier. En d'autres termes, l'application d'un tel système à un arbre et un palier animés d'un mouvement relatif de translation axiale est exclue.

Par ailleurs, dans le document DE-A-2 206 771, il est décrit un palier supérieur pour jambe télescopique de suspension comprenant plusieurs joints et une bague de frottement interposée entre joint et tige de piston. Mais un tel palier ne permet pas une compensation des efforts radiaux qu'il subit puisque les joints sont situés dans des plans perpendiculaires à la tige de piston, et constitue une réalisation complexe, d'un montage délicat, et pratiquement impossible à démonter dans le cas notamment d'une usure de la bague.

La présente invention a pour but de remédier notamment aux inconvénients ci-dessus en proposant une conception de palier qui est particulièrement simple, fiable et efficace pour compenser l'effort radial imparti au palier, et qui peut être facilement montée et démontée.

A cet effet, l'invention a pour objet un palier à compensation d'effort radial, en particulier pour système de suspension hydropneumatique, comprenant un corps qui contient un fluide sous pression et dans lequel est monté coulissant un élément formant piston, ce palier comprenant un joint d'étanchéité annulaire incliné par rapport à l'axe de l'élément coulissant et étant caractérisé en ce que ledit joint est monté dans un chambrage qui est ouvert du côté de la face inférieure du palier en contact avec le fluide sous pression et qui s'étend axialement suivant une hauteur qui croît entre deux parties diamétralement opposées dudit chambrage pour réaliser un épaulement incliné formant butée pour le joint et situé du côté de la partie supérieure du palier, tandis qu'au-dessus du chambrage est ménagée une première gorge concentrique à ce chambrage et comportant un épaulement ou fond plat situé au-dessus du niveau le plus haut de l'épaulement incliné, cette première gorge formant un logement pour une bague de frottement agencée entre le joint et le piston et maintenue avec le joint par un bouchon non étanche monté dans une deuxième gorge ménagée en dessous de et concentriquement au chambrage, cette deuxième gorge possèdant un diamètre supérieur à celui du chambrage et comportant un épaulement ou fond plat situé au niveau de l'extrémité inférieure ouverte du chambrage fermé par le bouchon.

Selon une autre caractéristique du palier de l'invention, le joint d'étanchéité annulaire possède un diamètre extérieur légèrement supérieur à celui du chambrage et de la bague de frottement.

Cette bague de frottement possède une hauteur égale à la distance entre les épaulements ou fonds plats de la première gorge et de la deuxième gorge respectivement.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique et en coupe axiale d'un système de suspension du type connu sous le nom de "Mac Pherson" et monté entre les roues et la caisse d'un véhicule; et

La figure 2 est une vue agrandie et en coupe axiale d'un palier conforme à la présente invention.

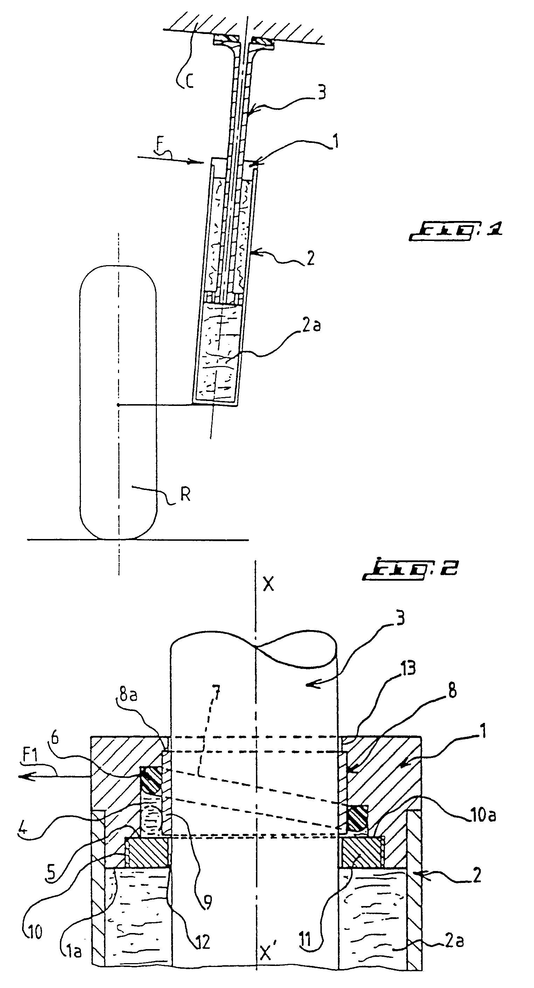

En se reportant à la figure 1, on voit un dispositif de suspension du type "Mac Pherson" constitué par un palier 1 fixé à l'extrémité supérieure d'un corps 2 alimenté en fluide sous pression 2a et relié à la masse non suspendue ou roues R d'un véhicule. Un piston 3, alésé axialement, et attelé à la masse suspendue ou caisse C du véhicule, est monté coulissant à l'intérieur du corps 2 après traversée du palier 1.

Conformément à l'invention, et comme on le voit bien sur la figure 2, la palier 1 comporte un chambrage 4 qui est ouvert, comme on le voit en 5 du côté de la face inférieure 1a du palier 1. Dans le chambrage 4, est logé un joint torique d'étanchéité 6 qui peut prendre la position inclinée visible sur la figure 2.

Plus précisément, on voit que le chambrage 4 s'étend, dans le sens axial, suivant une hauteur qui croît entre deux parties diamétralement opposées dudit chambrage de façon à réaliser un épaulement ou fond incliné 7 constituant une butée pour le joint 6. On voit bien sur la figure 2 l'inclinaison du joint 6 par rapport à l'axe X - X' du piston 3, cette inclinaison étant due à l'accroissement de la hauteur du chambrage 4 depuis la droite vers la gauche de la figure 2.

On comprend donc que le joint 6 pourra être facilement inséré par le côté inférieur ouvert 5 du chambrage 4 et qu'en outre, la pression du fluide 2a provoquera une poussée sur le joint 6 qui va remonter jusqu'à rencontrer l'épaulement incliné 7.

Au-dessus du chambrage 4, est ménagée une première gorge 8 concentrique au chambrage 4, possèdant un diamètre inférieur à ce chambrage et fermée par un épaulement ou fond plat 8a situé au-dessus du niveau le plus haut de l'épaulement incliné 7, comme on le voit sur la partie gauche de la figure 2.

Dans cette première gorge 8, est logée une bague 9 qui assure un bon frottement entre le palier 1 et le piston 3, qui évite l'usure du joint 6 du fait qu'il n'y a pas de frottement entre ce joint et le piston 3, et qui évite également l'extrusion du joint 6 sous l'effet de la pression.

En dessous du chambrage 4, est ménagée une deuxième gorge 10 concentrique au chambrage 4, possèdant un diamètre supérieur à ce chambrage et comportant un épaulement ou fond plat 10a situé au niveau de l'extrémité inférieure ouverte 5 du chambrage 4.

Dans cette deuxième gorge 10, est vissé ou emmanché un bouchon 11 qui n'est pas étanche, comme on le voit en 12. Le rôle du bouchon 11 est de fermer le chambrage 4 et la première gorge 8, ce qui permet ainsi de maintenir les deux éléments qui sont à l'intérieur, à savoir le joint torique 6 et la bague de frottement 9.

On notera ici que le joint torique 6 possède un diamètre extérieur légèrement supérieur à celui du chambrage 4 et donc de la bague de frottement 9. Ainsi, le joint 6 maintiendra la bague 9 en appui sur la périphérie du piston 3, ce qui assure l'étanchéité entre la bague 9 et ledit piston.

On ajoutera encore ici, comme on le voit bien sur la figure 2, que la bague 9 possède une hauteur égale à la distance entre les épaulements ou fonds plats 8a et 10a de la première gorge 8 et de la deuxième gorge 10.

On a montré en 13 sur la figure 2 une partie supérieure du palier 1 qui est dégagée, cette partie ne devant être que légèrement plus haute que le fond plat 8a de la première gorge 8, de façon que le piston 3, lors de son coulissement, ne puisse pas venir en contact avec le matériau du palier 1.

La disposition à joint incliné qui vient d'être décrite permet donc à la pression qui règne sous le joint 6 de déséquilibrer radialement le piston 3 et de créer un effort radial, suivant le sens de la flèche F1 entre le palier 1 et le piston 3.

Il suffit par conséquent, lors du montage du palier 1 sur le corps 2, de prévoir une orientation telle que le point haut de la pente ou épaulement 7, se trouve du côté de l'effort radial F que l'on veut compenser par ce système.

## Revendications

1. Palier à compensation d'effort radial, en particulier pour système de suspension hydropneumatique, comprenant un corps (2) qui contient un fluide sous pression et dans lequel est monté coulissant un élément formant piston (3), ce palier comprenant un joint d'étanchéité annulaire (6) incliné par rapport à l'axe (X - X') de l'élément coulissant et étant caractérisé en ce que ledit joint (6) est monté dans un chambrage (4) qui est ouvert du côté de la face inférieure (1a) du palier (1) en contact avec le fluide sous pression et qui s'étend axialement suivant une hauteur qui croît entre deux parties diamétralement opposées dudit chambrage pour réaliser un épaulement incliné (7) formant butée pour le joint (6) et situé du côté de la partie supérieure du palier (1), tandis qu'au-dessus du chambrage est ménagée une première gorge (8) concentrique à ce chambrage et comportant un épaulement ou fond plat (8a) situé au-dessus du niveau le plus haut de l'épaulement incliné (7), cette première gorge (8) formant un logement pour une bague de frottement (9) agencée entre le joint (6) et le piston (3) et maintenue avec le joint (6) par un bouchon (11) non étanche monté dans une deuxième gorge (10) ménagée en dessous de et concentriquement au chambrage (4), cette deuxième gorge possèdant un diamètre supérieur à celui du chambrage et comportant un épaulement ou fond plat (10a) situé au niveau de l'extrémité inférieure ouverte (5) du chambrage (4) fermé par le bouchon (11).

2. Palier selon la revendication 1, caractérisé en ce que le joint d'étanchéité annulaire (6) possède un diamètre extérieur légèrement supérieur à celui du chambrage (4) et de la bague de frottement (9).

3. Palier selon la revendication 1 ou 2, caractérisé en ce que la bague de frottement (9) possède une hauteur égale à la distance entre les épaulements ou fonds plats (8a, 10a) de la première gorge (8) et de la deuxième gorge (10) respectivement.

## Patentansprüche

1. Lager mit Radialkraftausgleich, insbesondere für ein hydropneumatisches Aufhängungssystem, mit einem Gehäuse (2), das ein Druckmedium enthält und in welchem ein einen Kolben (3) bildendes Element gleitverschiebbar angeordnet ist, wobei dieses Lager eine gegenüber der Mittellinie (X - X') des gleitbaren Elementes geneigte ringförmige Dichtung (6) aufweist und dadurch gekennzeichnet ist, daß die besagte Dichtung (6) in einer Einsenkung (4) angeordnet ist, welche zur mit dem Druckmedium in Berührung stehenden unteren Seite (1) hin des Lagers (1) offen ist und sich axial über eine Höhe erstreckt, die zwischen zwei diametral entgegengesetzten Teilen der besagten Einsenkung zunimmt, um eine einen Anschlag für die Dichtung (6) bildende und im Bereich des höheren Teiles des Lagers (1) liegende geneigte Schulter (7) zu bilden, während oberhalb der Einsenkung eine erste konzentrisch zu dieser Einsenkung verlaufende Nut (8) angeordnet ist, mit einer Schulter bzw. einem flachen Falz (8a), die bzw. der oberhalb der größten Höhe der geneigten Schulter (7) liegt, wobei diese erste Nut (8) eine Aufnahme für einen zwischen der Dichtung (6) und dem Kolben (3) angeordneten Reibungsring (9) bildet, welcher zusammen mit der Dichtung (6) durch ein in einer zweiten, unterhalb und konzentrisch zu der Einsenkung (4) gebildeten Nut (10) angeordnetes Abschlußglied (11) gehalten wird, wobei diese zweite Nut einen größeren Durchmesser als denjenigen der Einsenkung aufweist und eine Schulter bzw. einen flachen Falz (10a) aufweist, die bzw. der in der Höhe des offenen unteren Endes (5) der durch das Abschlußglied (11) verschlossenen Einsenkung (4) liegt.

2. Lager nach Anspruch 1, dadurch gekennzeichnet, daß die ringförmige Dichtung (6) einen etwas größeren Außendurchmesser als diejenigen der Einsenkung (4) und des Reibungsrings (9) besitzt.

3. Lager nach Anspruch 1 oder 2, dadurch gekennzeichnet, daß der Reibungsring (9) eine Höhe hat, die mit dem Abstand zwischen den Schultern bzw. flachen Falzen (8a, 10a) jeweils der ersten Nut (8) und der zweiten Nut (10) gleich ist.

## Claims

1. Bearing with radial force compensation in particular for a hydropneumatic suspension system, comprising a casing (2) which contains a fluid under pressure and in which is slidably mounted a piston-like element (3), this bearing comprising an annular seal (6) inclined with respect to the axis (X - X') of the sliding element and being characterized in that the said seal (6) is mounted within a recess (4) which is open towards the lower face (1a) of the bearing (1) in contact with the fluid under pressure and which extends axially along a height which increases between two diametrally opposite portions of the said recess to form an inclined shoulder (7) forming an abutment for the seal (6) and located towards the upper part of the bearing (1), whereas above the recess is formed a first groove (8) concentric with this recess and comprising a shoulder or flat ledge (8a) located above the highest level of the inclined shoulder (7), this first groove (8) forming an accommodation for the friction ring (9) arranged between the seal (6) and the piston (3) and held together with the seal (6) by a non fluid-tight plug (11) mounted in a second groove (10) provided below and concentrically to the recess (4), this second groove having a diameter greater than that of the recess and comprising a shoulder or flat ledge (10a) located at the level of the open bottom end (5) of the recess (4) closed by the plug (11).

2. Bearing according to claim 1, characterized in that the annular seal (6) has an outer diameter slightly greater than those of the recess (4) and of the friction ring (9).

3. Bearing according to claim 1 or 2, characterized in that the friction ring (9) has a height equal to the distance between the shoulders or flat ledges (8a, 10a) of the first groove (8) and of the second groove (10), respectively.

_FIG. 1_

_FIG. 2_